# EUROPEAN PATENT APPLICATION

(11) **EP 2 072 313 A1**
(43) Date of publication of application: **24.06.2009**
(21) Application number: 07025071.7
(22) Date of filing: 22.12.2007
(51) Int. Cl.: B60K 11/04, B62D 25/08

(54) **Radiator assembly for an automotive vehicle, automotive vehicle and method for mounting a radiator assembly on a body structure of an automotive vehicle**

(71) Applicant: GM Global Technology Operations, Inc., Detroit MI 48265-3 (US)
(72) Inventor: Kerkewitz, Richard, 55270 Klein-Winternheim (DE)
(74) Representative: Strauss, Peter

(57) **Abstract**

A radiator assembly (8) for an automotive vehicle comprises a radiator (9) of a radiator unit (21) and at least one decoupling element (12) for fixing the radiator (9) to a vehicle body structure (17). The at least one decoupling element (12) is connected to the radiator (9) and comprises a first section (13) contained in the radiator unit (21) and a second section (14) protruding from the radiator unit (21), a junction plane (15) between the first section (13) and the second section (14) being designed as a weak link.

## Description

Radiator assembly for an automotive vehicle, automotive vehicle and method for mounting a radiator assembly on a body structure of an automotive vehicle

The invention relates to a radiator assembly for an automotive vehicle. It further relates to an automotive vehicle with a radiator assembly and to a method for mounting a radiator assembly on a body structure of an automotive vehicle.

A radiator unit is mounted on the body structure of an automotive vehicle by means of a number of support members. Documents US 4,579,184 and DE 39 26 568 C1 disclose support members being designed as pins protruding from the radiator unit and being contained in a retaining structure of a vehicle body structure, thereby fixing the radiator unit to the vehicle body structure.

In case of an accident with damage to the front-end of the vehicle, the radiator unit is pushed back towards the engine and breaks the pins. As a consequence, to repair the damage, a replacement of the radiator unit as a whole or a complex replacement of the broken pins is necessary.

The document DE 601 17 740 T2 discloses a fastening structure to attach the radiator unit to a frame which itself is attached to the vehicle body structure, where the fastening structure comprises a contact part made of elastomer designed to be interposed between the radiator unit and the frame. If in the case of an accident the radiator unit is pushed back towards the engine, the radiator unit is non-destructively detached from the frame by means of the contact part.

However, the possibility of damage to the radiator unit or the frame cannot be eliminated completely in this case, since the non-destructive detachment may not work fast enough in any case.

Consequently, existing radiator units are expensive to repair in case of an accident and therefore cause high insurance costs.

It is, therefore, an object of the present invention, to provide a radiator assembly, which does not need to be repaired expensively after being pushed back towards the engine in case of an accident.

It is a further object of the present invention, to provide a method for mounting a radiator assembly on a body structure of an automotive vehicle in order to provide an attachment of the radiator assembly to the body structure which can be repaired easily.

This object is solved by the subject matter of the independent claims. Further developments are the subject matter of the dependent claims.

According to the invention, a radiator assembly for an automotive vehicle comprises a radiator unit and at least one decoupling element for fixing the radiator unit to a vehicle body structure. The at least one decoupling element is connected to the radiator unit and comprises a first section contained in the radiator unit and a second section protruding from the radiator unit. A junction plane between the first and the second section is designed as a weak link.

Typically, there are provided several decoupling elements in order to fix the radiator unit securely in the engine compartment of the vehicle.

According to the invention, the decoupling elements provide the link between the radiator unit and the vehicle body structure. They are called "decoupling elements" all the same, because in the case of an accident and the radiator being pushed back towards the engine, they permit the decoupling of the radiator unit from the vehicle body structure. Since the junction plane between the first and the second section is designed as a weak link, the decoupling elements break in this plane due to shear forces acting on the decoupling element, and the radiator unit itself is not damaged.

Therefore, the decoupling elements according to the invention are designed to be destroyed in case of an accident. They may, however, be replaced easily and inexpensively due to the fact that they are not formed in one piece with parts of the radiator. In fact, the decoupling elements are separate pieces preferably formed of a plastic material, e.g. an elastomer, that can be replaced without difficulty.

According to one embodiment of the invention, a grommet, e.g. a rubber grommet, is provided as decoupling element.

Preferably, the first section of the at least one decoupling element is contained in a first retaining structure inside a radiator tank and the first section of the at least one decoupling element is designed to be connected with positive locking to the first retaining structure. This enables on one hand a secure attachment of the decoupling element to the radiator unit and defines on the other hand a weak link, namely the junction plane between the first and the second section separating the section inside the radiator unit from the section outside, along which the decoupling element may break in case of an accident.

It is a further advantage of this embodiment that it saves space which may be scarce in the engine compartment of an automotive vehicle.

According to the invention, an automotive vehicle comprises a radiator assembly as just described. At least one part of the second section of the at least one decoupling element is contained in a second retaining structure of a vehicle body structure, thereby fixing the radiator assembly to the vehicle body structure.

According to one embodiment, the at least one part of the second section is designed to be connected with positive locking to the retaining structure of the vehicle body structure.

A method for mounting a radiator assembly on a body structure of an automotive vehicle according to the invention comprises the steps of
- providing a radiator unit comprising at least one first retaining structure for receiving a first section of a decoupling element;
- providing a vehicle body structure comprising at least one second retaining structure for receiving a second section of the decoupling element;
- providing at least one decoupling element comprising a first section and a second section, a junction plane between the first and the second section being designed as a weak link;
- inserting the first section of the at least one decoupling element into the first retaining structure und the second section into the second retaining structure.

The radiator assembly and the method according to the invention enable a very simple and inexpensive repair of the radiator assembly in case of an accident due to the fact, that only the destroyed separate decoupling elements must be replaced. Providing the weak link in the decoupling elements prevents damage of the radiator itself.

### Embodiments will now be described with reference to the drawing.

- Figure 1: shows schematically a radiator unit according to the prior art;
- Figure 2: shows schematically a radiator assembly according to an embodiment of the present invention and
- Figure 3: shows schematically a radiator assembly according to another embodiment of the present invention.

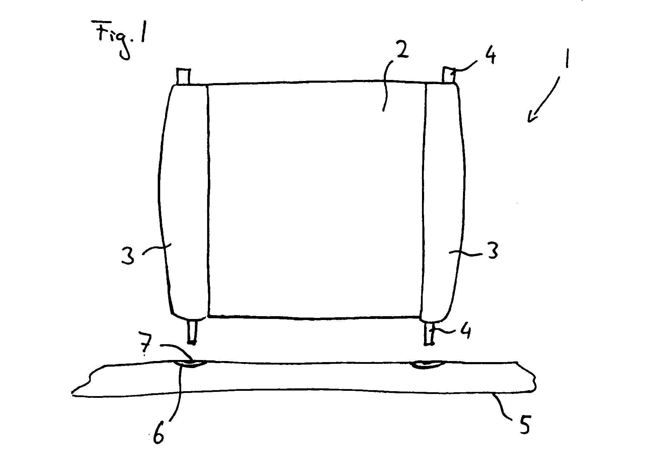

Figure 1 illustrates a radiator unit 1 comprising a radiator 2, supply means (not shown) and a radiator tank 3. The radiator unit 1 is attached to a vehicle body structure 5 by means of metal pins 4 protruding from the radiator 2 or the radiator tank 3 and being formed in one piece with parts of the radiator tank 3 or being rigidly coupled to the radiator tank 3.

In order to attach the radiator unit 1 to the vehicle body structure 5, a rubber element 6 with a receiving portion 7 is provided in the vehicle body structure 5, the receiving portion 7 receiving the protruding pins 4.

In case of an accident, the radiator unit 2 is pushed back towards the engine and the pins 4 tend to break or at least bend due to the force exerted on them.

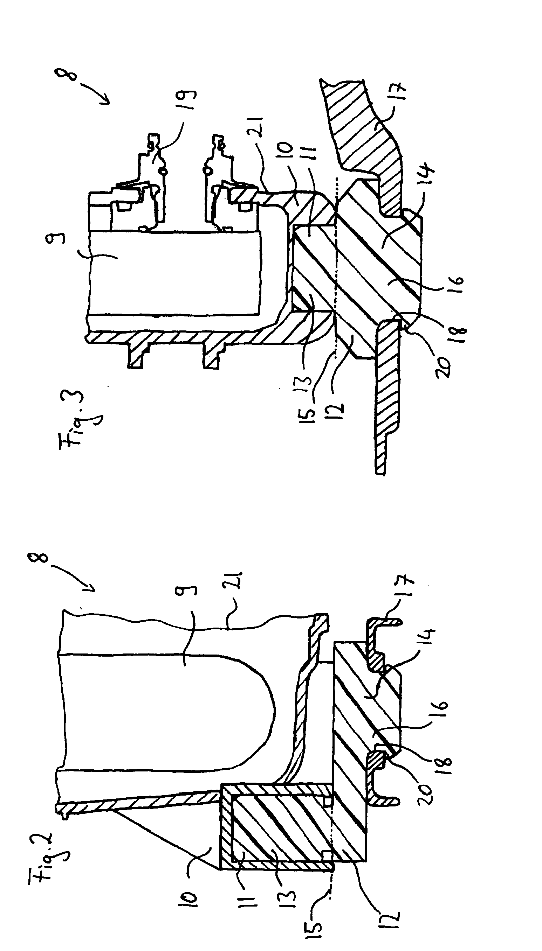

Figure 2 illustrates a cross section of a radiator assembly 8 according to one embodiment of the present invention. The radiator assembly 8 comprises a radiator unit 21 with a radiator 9, a radiator tank 10 and supply means (not shown). It further comprises decoupling elements 12 to attach the radiator assembly 8 to a vehicle body structure 17.

In this embodiment, rubber grommets are used as decoupling elements 12. The decoupling elements 12 comprise a first section 13, that is mounted in a first retaining structure 11 inside the radiator tank 10. They further comprise a second section 14 protruding from the radiator tank 10. A junction plane 15 between the first section 13 and the second section 14 is designed as a weak link.

Thus, a part of the decoupling elements 12, namely the first section 13, is contained inside the radiator tank 10, thereby providing a reliable and space-saving fastening of the radiator assembly 8.

At least a part 16 of the second section 14 of the decoupling elements 12 is contained in a second retaining structure 18 assigned to the vehicle body structure 17. In the embodiment shown in figure 2, the decoupling element 12 has anchor means 20 to fix the decoupling element 12 to the vehicle body structure 17. The first section 13 as well as the second section 14 are connected with positive locking to the first retaining structure 11 and the second retaining structure 18, respectively.

In case of an accident with damage to the front-end of the vehicle, the radiator assembly 8 is pushed back towards the engine (not shown) and therefore moves with respect to the vehicle body structure 17.

Due to the exerted force the first section 13 of the decoupling element 12 contained in the first retaining structure 11 is sheared off essentially along the junction plane 15 or shearing plane, which defines a weak link of the radiator assembly 8. While a part of the decoupling element, namely the second section 14, remains with the vehicle body structure 17, the first section 13 remains with the radiator 9. The radiator 9 itself is in most cases of minor accidents not damaged at all, but may be put back in place by a simple and inexpensive repair.

In order to repair the radiator assembly 8, the remains of the decoupling element 12 are disposed of and a new decoupling element 12 is inserted.

Figure 3 shows a cross-sectional view of a radiator assembly 8 according to another embodiment of the present invention. In principle, the radiator assemblies 8 according to figures 2 and 3 correspond to each other, whereas in figure 3 supply units 19 of the radiator 9 are shown schematically. In figure 3 it is shown, that the decoupling element 12 may take a form adapted to that of the first retaining structure 11, of the second retaining structure 18 and to the general outline of the radiator 9.

### Reference numbers

- 1: radiator unit
- 2: radiator
- 3: radiator tank
- 4: pin
- 5: vehicle body structure
- 6: rubber element
- 7: receiving portion
- 8: radiator assembly
- 9: radiator
- 10: radiator tank
- 11: first retaining structure
- 12: decoupling element
- 13: first section
- 14: second section
- 15: junction plane
- 16: part of the second section
- 17: vehicle body structure
- 18: second retaining structure
- 19: supply unit
- 20: anchor means
- 21: radiator unit

## Claims

1. A radiator assembly (8) for an automotive vehicle, comprising
- a radiator (9) of a radiator unit (21);
- at least one decoupling element (12) for fixing the radiator (9) to a vehicle body structure (17);
- the at least one decoupling element (12) is connected to the radiator (9) and comprises a first section (13) contained in the radiator unit (21) and a second section (14) protruding from the radiator unit (21), a junction plane (15) between the first section (13) and the second section (14) is designed as a weak link.

2. Radiator assembly (8) according to claim 1,
**characterized in that**
the at least one decoupling element (12) is formed of a plastic material.

3. Radiator assembly (8) according to claim 2,
**characterized in that**
the at least one decoupling element (12) is formed of an elastomer.

4. Radiator assembly (8) according to claim 2 or 3,
**characterized in that**
a grommet is provided as decoupling element (12).

5. Radiator assembly (8) according to one of claims 1 to 4,
**characterized in that**
the first section (13) of the at least one decoupling element (12) is contained in a first retaining structure (11) inside a radiator tank (10).

6. Radiator assembly (8) according to claim 5,
**characterized in that**
the first section (13) of the at least one decoupling element (12) is designed to be connected with positive locking to the first retaining structure (11).

7. An automotive vehicle with a radiator assembly (8) according to one of claims 1 to 6,
**characterized in that**
at least one part (16) of the second section (14) of the at least one decoupling element (12) is contained in a second retaining structure (18) of a vehicle body structure (17), thereby fixing the radiator assembly (8) to the vehicle body structure (17).

8. Automotive vehicle according to claim 7,
**characterized in that**
the at least one part (16) of the second section (14) is designed to be connected with positive locking to the second retaining structure (18) of the vehicle body structure (17).

9. A method for mounting a radiator assembly (8) on a body structure (17) of an automotive vehicle, comprising the steps of
- providing a radiator unit (21) comprising at least one first retaining structure (11) for receiving a first section (13) of a decoupling element (12);
- providing a vehicle body structure (17) comprising at least one second retaining structure (18) for receiving a second section (14) of the decoupling element (12);
- providing at least one decoupling element (12) comprising a first section (13) and a second section (14), a junction plane (15) between the first section (13) and the second section (14) being designed as a weak link;
- inserting the first section (13) of the at least one decoupling element (12) into the first retaining structure (11) und the second section (14) into the second retaining structure (18).

10. Method according to claim 9,
**characterized in that**
the at least one decoupling element (12) is formed of a plastic material.

11. Method according to claim 10,
**characterized in that**
the at least one decoupling element (12) is formed of an elastomer.

12. Method according to claim 10 or 11,
**characterized in that**
a grommet is provided as decoupling element (12).

13. Method according to one of claims 9 to 12,
**characterized in that**
the first section (13) of the at least one decoupling element (12) is connected with positive locking to the first retaining structure (11).

14. Method according to one of claims 9 to 13,
**characterized in that**
the at least one part (16) of the second section (14) is connected with positive locking to the second retaining structure (18) of the vehicle body structure (17).
